# EUROPEAN PATENT APPLICATION

(11) **EP 4 693 812 A1**
(43) Date of publication of application: **11.02.2026**
(21) Application number: 24807316.5
(22) Date of filing: 22.02.2024
(51) Int. Cl.: H02J 7/34, H02J 7/00, G06F 1/26, H04B 1/3883

(54) **ELECTRONIC DEVICE FOR SUPPLYING POWER TO OUTSIDE**

(30) Priority: 15.05.2023 KR 20230062370; 13.06.2023 KR 20230075802
(71) Applicant: Samsung Electronics Co., Ltd., Suwon-si, Gyeonggi-do 16677 (KR)
(72) Inventor: PARK, Jongdo, Suwon-si, Gyeonggi-do 16677 (KR); RHEE, Minsu, Suwon-si, Gyeonggi-do 16677 (KR); JEON, Gyuyeon, Suwon-si, Gyeonggi-do 16677 (KR)
(74) Representative: Gulde & Partner
(86) International application number: PCT/KR2024/002295
(87) International publication number: WO 2024/237434

(57) **Abstract**

Provided is an electronic device comprising: a battery; a connector including a power terminal and a data terminal; a communication circuit connected to the data terminal; a power conversion circuit connected to the battery and the power terminal and configured to boost the voltage of the battery at a specified ratio and output power of the battery to the power terminal; a processor connected to the communication circuit and the power conversion circuit; and a memory connected to the processor. The processor may control the power conversion circuit to supply first power having a first current value to an external power reception device through the power terminal, and while the first power is being supplied to the power reception device, identify that an event for which the power supplied to the power reception device must be lowered has occurred in the electronic device, and on the basis of having identified that the event has occurred, transmit, to the power reception device, a first request message for requesting to receive less power by means of the data terminal.

## Description

### [Technical Field]

An embodiment of the disclosure relates an electronic device for supplying (or sharing) power between devices (device to device).

### [Background Art]

An electronic device (for example, a smartphone or a tablet PC) (hereinafter, referred to as a power supply device) may be connected to another electronic device (hereinafter, referred to as a power reception device) through a wired cable (for example, a USB cable) and may supply power to the power reception device. The power reception device may charge a battery by using the supplied power.

The information may be provided as the related art for the purpose of helping to understand the disclosure. No claim or determination is raised as to whether any of the above-described information may be applied as the prior art related to the disclosure.

### [Disclosure of Invention]

### [Technical Problem]

A power supply device is a component for supplying power to a power reception device and may include a direct charging circuit and a switching charging circuit. The switching charging circuit may convert a current value and/or a voltage value of an input power signal and output the power signal. For example, the switching charging circuit may control and output a ratio (voltage conversion ratio) of the voltage value of the output power signal to the voltage value of the input power signal. The direct charging circuit may convert the voltage value of the input power signal to a fixed voltage conversion ratio and output the power signal. It is difficult to control the output voltage due to the fixed voltage conversion ratio, but relatively high power can be supplied, and thus the direct charging circuit may be suitable for fast charging of the battery.

When power is supplied from the power supply device to the power reception device, a charging circuit may switch from the direct charging circuit to the switching charging circuit in order to reduce a supplied power value. When the circuit switches, the voltage of the power signal output from the power supply device may rapidly drop. In order to suppress the disconnection of charging due to the voltage drop, the power supply device may perform an operation of controlling timing for switching between charging circuits.

An embodiment of the disclosure may provide an electronic device which allows the stable power supply from the power supply device to the power reception device without switching between charging circuits. The technical problem to be solved in the disclosure may not be limited to the above-mentioned technical problem, and other technical problems which are not mentioned may be clearly understood, through the following descriptions, by those skilled in the art of the disclosure.

### [Solution to Problem]

According to an embodiment, an electronic device includes a battery, a connector including a power terminal and a data terminal, a communication circuit connected to the data terminal, a power conversion circuit connected to the battery and the power terminal and configured to step up a voltage of the battery at a predetermined ratio and output power of the battery to the power terminal, a processor, and a memory. The memory may store instructions that, when executed by the processor, cause the electronic device to control the power conversion circuit to supply first power having a first current value to an external power reception device through the power terminal. The instructions, when executed by the processor, may cause the electronic device to identify that an event in which the power supplied to the power reception device needs to be lowered occurs in the electronic device while the first power is supplied to the power reception device. The instructions, when executed by the processor, may cause the electronic device to, based on identifying the occurrence of the event, transmit a first request message requesting to receive less power to the power reception device through the data terminal.

According to an embodiment, the electronic device includes a battery, a connector including a power terminal and a data terminal, a communication circuit connected to the data terminal, a charging circuit connected to the battery and the power terminal and configured to charge the battery by using power received from an external power supply device through the power terminal, a processor, and a memory. The memory may store instructions that, when executed by the processor, cause the electronic device to receive, through the communication circuit, a first request message requesting to receive less power from the power supply device while the charging circuit receives first power having a first current value from the external power supply device through the power terminal and charges the battery. The instructions, when executed by the processor, may cause the electronic device to, based on receiving the first request message, limit a current input into the charging circuit from the power supply device through the power terminal to a value not exceeding a threshold current value configured to be smaller than the first current value, so as to receive less power than the first power from the power supply device through the power terminal.

According to an embodiment, a method of operating an electronic device includes supplying first power having a first current value to an external power reception device through a power terminal included in the electronic device by using a power conversion circuit configured to boost a voltage of a battery at a predetermined ratio. The method may include identifying that an event in which power supplied to the power reception device needs to be lowered occurs in the electronic device while the first power is supplied to the power reception device. The method may include, based on identifying the occurrence of the event, transmitting a first request message requesting to receive less power to the power reception device through a data terminal included in the electronic device.

### [Advantageous Effects of Invention]

According to an embodiment of the disclosure, it is possible to stably supply power without switching between charging circuits when a power supply device desires to reduce a power value supplied to a power reception device. In addition, various effects directly or indirectly detected through this document can be provided.

### [Brief Description of Drawings]

FIG. 1 is a block diagram of an electronic device within a network environment according to various embodiments.
FIG. 2 is a diagram illustrating a power management module and a battery according to various embodiments.
FIG. 3 illustrates a power sharing system according to an embodiment.
FIG. 4 is a flowchart illustrating operations between a first processor in a power supply device and a second processor in a power reception device, based on a decrease in a charging rate of a first battery in the power supply device according to an embodiment.
FIG. 5 is a flowchart illustrating operations between the first process in the power supply device and the second processor in the power reception device, based on a change in internal temperature of the power supply device according to an embodiment.
FIG. 6 is a flowchart illustrating operations between the first process in the power supply device and the second processor in the power reception device, based on whether a display is activated in the power supply device according to an embodiment.
FIG. 7A is a diagram illustrating a change in an output voltage in the power supply device when supplied power is reduced through switching from a first power conversion circuit to a second power conversion circuit, and FIG. 7B is a diagram illustrating a change in the output voltage in the power supply device when supplied power is reduced using the first power conversion circuit.
FIG. 8 is a flowchart illustrating operations of the first processor in the power supply device according to an embodiment.

Hereinafter, embodiments of the disclosure will be described in detail with reference to the drawings so as to be easily implemented by those skilled in the art to which the disclosure belongs. However, the disclosure may be implemented in various different forms and is not limited to the embodiments described herein. In connection with the description of the drawings, the same or similar reference numerals may be used for the same or similar components. Further, in the drawings and relevant description, the description for well known functions and configurations may be omitted for clarity and brevity.

### [Mode for the Invention]

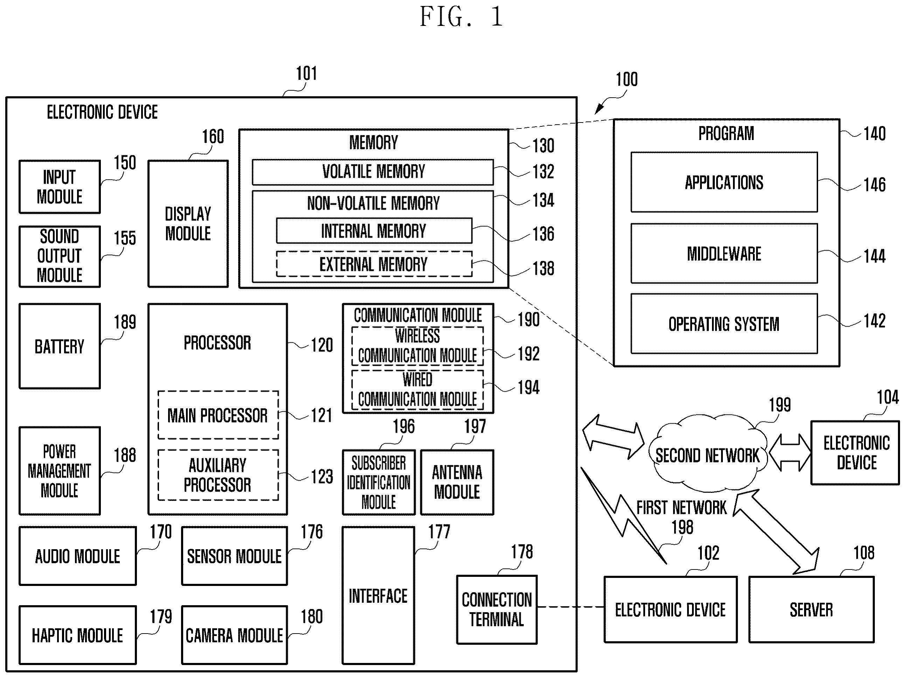

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

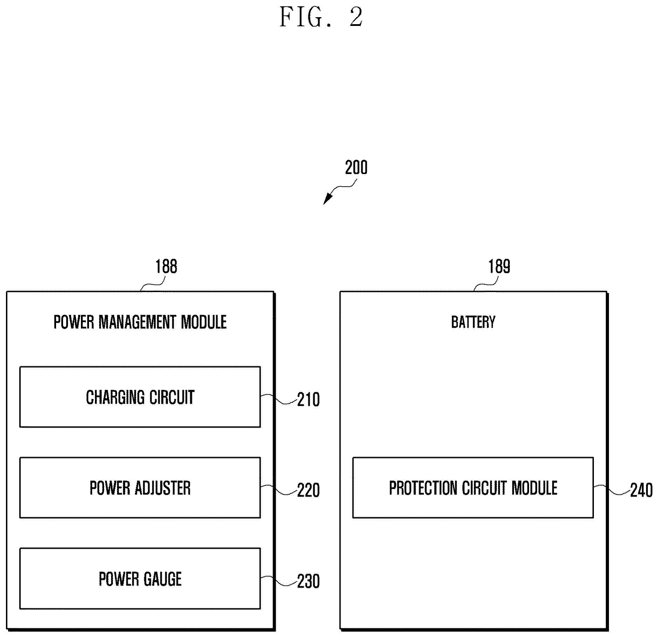

Fig. 2 is a block diagram 200 illustrating the power management module 188 and the battery 189 according to various embodiments. Referring to Fig. 2, the power management module 188 may include charging circuitry 210, a power adjuster 220, or a power gauge 230. The charging circuitry 210 may charge the battery 189 by using power supplied from an external power source outside the electronic device 101. According to an embodiment, the charging circuitry 210 may select a charging scheme (e.g., normal charging or quick charging) based at least in part on a type of the external power source (e.g., a power outlet, a USB, or wireless charging), magnitude of power suppliable from the external power source (e.g., about 20 Watt or more), or an attribute of the battery 189, and may charge the battery 189 using the selected charging scheme. The external power source may be connected with the electronic device 101, for example, directly via the connecting terminal 178 or wirelessly via the antenna module 197.

The power adjuster 220 may generate a plurality of powers having different voltage levels or different current levels by adjusting a voltage level or a current level of the power supplied from the external power source or the battery 189. The power adjuster 220 may adjust the voltage level or the current level of the power supplied from the external power source or the battery 189 into a different voltage level or current level appropriate for each of some of the components included in the electronic device 101. According to an embodiment, the power adjuster 220 may be implemented in the form of a low drop out (LDO) regulator or a switching regulator. The power gauge 230 may measure use state information about the battery 189 (e.g., a capacity, a number of times of charging or discharging, a voltage, or a temperature of the battery 189).

The power management module 188 may determine, using, for example, the charging circuitry 210, the power adjuster 220, or the power gauge 230, charging state information (e.g., lifetime, over voltage, low voltage, over current, over charge, over discharge, overheat, short, or swelling) related to the charging of the battery 189 based at least in part on the measured use state information about the battery 189. The power management module 188 may determine whether the state of the battery 189 is normal or abnormal based at least in part on the determined charging state information. If the state of the battery 189 is determined to abnormal, the power management module 188 may adjust the charging of the battery 189 (e.g., reduce the charging current or voltage, or stop the charging). According to an embodiment, at least some of the functions of the power management module 188 may be performed by an external control device (e.g., the processor 120).

The battery 189, according to an embodiment, may include a protection circuit module (PCM) 240. The PCM 240 may perform one or more of various functions (e.g., a pre-cutoff function) to prevent a performance deterioration of, or a damage to, the battery 189. The PCM 240, additionally or alternatively, may be configured as at least part of a battery management system (BMS) capable of performing various functions including cell balancing, measurement of battery capacity, count of a number of charging or discharging, measurement of temperature, or measurement of voltage. According to an embodiment, the protection circuit module (PCM) 240 may include protection ICs and/or switching elements (metal oxide semiconductor field effect transistors (MOSFETs).

According to an embodiment, at least part of the charging state information or use state information regarding the battery 189 may be measured using a corresponding sensor (e.g., a temperature sensor) of the sensor module 176, the power gauge 230, or the power management module 188.. According to an embodiment, the corresponding sensor (e.g., a temperature sensor) of the sensor module 176 may be included as part of the PCM 240, or may be disposed near the battery 189 as a separate device.

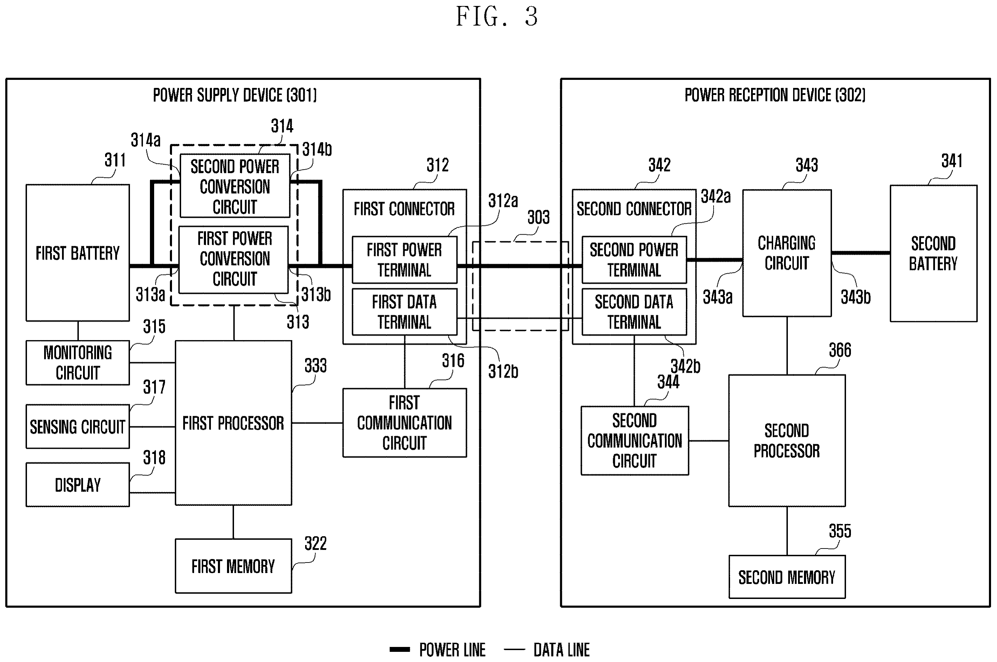

FIG. 3 illustrates a power sharing system according to an embodiment. The power sharing system may include a power supply device 301, a power reception device 302, and a cable (for example, a USB Type-C cable) 303 for supporting data communication and power sharing between the two devices 301 and 302.

The power supply device 301 may include a first battery 311, a first connector 312, a first power conversion circuit 313, a second power conversion circuit 314, a monitoring circuit 315, a first communication circuit 316, a sensing circuit 317, a touch sensitive display 318, a first memory 322, and a processor 333. The display 318, the first memory 322, and the first processor 333 may be implemented to be substantially the same as the display module 160, the memory 130, and the processor 120 in FIG. 1, and thus may perform the same function. The first memory 322 may store instructions for supporting power supply from the power supply device 301 to the power reception device 302 and may be executed by the first processor 333.

The first connector 312 (for example, the connection terminal 178 of FIG. 1) may include a first power terminal 312a for transmitting or receiving a power signal to or from an external electronic device and a first data terminal 312b for data communication with an external electronic device. For example, the first connector 312 may be configured as a socket according to universal serial bus (USB) Type-C and coupled to a plug of the cable 303. Among pins of the USB Type-C socket, a VBUS pin may be used as the power terminal 312a and a (configuration channel) CC pin and/or a differential signal pin (DP (D+) or DN (D-)) may be used as the data terminal 312b.

Both ends 313a and 313b of the first power conversion circuit 313 may be connected to the first battery 311 and the first power terminal 312a, respectively. The first power conversion circuit 313 may be configured to convert a voltage value of a power signal input from one of the both ends 313a and 313b into a fixed voltage conversion ratio (a radio of a voltage value of an output power signal to a voltage value of an input power signal) and output the voltage conversion ratio to the other one of the both ends 313a and 313b. The first power conversion circuit 313 may include a circuit (for example, a switched capacitor voltage divider (SCVD)) configured to make a ratio of output power to input power be "1". For example, the first power conversion circuit 313 may convert a voltage value (for example, 4.5 V) of a power signal received from the first battery 311 through a first end 313a into 1:N (boost the same by N times), convert a current value into 1:1/N, and supply power (for example, a maximum of about 15 W (=9 V*1.67 A) to the power reception device 302 through the second end 313b. Accordingly, the battery included in the power reception device 302 may be charged. The first power conversion circuit 313 may convert a voltage value (for example, 9 V) of a power signal received from an external electronic device (for example, a travel adapter (TA)) connected to the first power terminal 312a through the second end 313b into 1:1/N, convert a current value into 1:N, and supply power (for example, a maximum of about 15 W (=4.5 V*3.33 A) to the first battery 311 through the first terminal 313a. Accordingly, the first battery 311 may be charged through the first power conversion circuit 313. The first power conversion circuit 313 may be replaced with the term "direct charging circuit".

Both ends 314a and 314b of the second power conversion circuit 314 (for example, a buck booster conversion) may be connected to the first battery 311 and the first power terminal 312a, respectively. The second power conversion circuit 314 may convert a voltage value and/or a current value of a power signal input from one of the both ends 313a and 313b and output the converted value to the other terminal. For example, the second power conversion circuit 314 may boost the voltage value (for example, 5 V) of the power signal received from the first battery 311 through the first end 314a and supply power (for example, about 4.5 W (=5 V*0.9 A) to the power reception device 302 through the second end 314b. The second power conversion circuit 314 may convert a voltage value and/or a current value of a power signal received from an external electronic device (for example, a travel adapter (TA)) connected to the first power terminal 312a through the second end 314b and supply power to the first battery 311 through the first end 314a. The second power conversion circuit 314 may include the charging circuit 210 included in the power management module 188. The second power conversion circuit may be replaced with the term "switching charging circuit".

The monitoring circuit 315 (for example, the power gauge 230 of FIG. 2) may monitor the voltage of the battery 311. For example, the monitoring circuit 315 may be connected to both ends (+ pole and - pole) of the first battery 311 to monitor the voltage of the battery 311, and output the result (data indicating a voltage value) to the processor 333. The processor 333 may determine a state of charge (SOC) of the battery 311, based on the monitoring result. The processor 333 may control charging of the first battery 311, based on the SOC. For example, when the voltage of the first battery 311 reaches a target voltage value (for example, 4.5 V) while the first battery 311 is charged in a constant current (CC) mode, the first processor 333 may control a charging circuit (for example, the second power conversion circuit 314) to slowly reduce the current input into the first battery 311 so as to maintain the voltage of the first battery 311 as the target voltage value by switching the charging mode to a constant voltage (CV) mode. When the current input into the first battery 311 is lowered up to a predetermined current value (for example, a topoff current value) to complete charging, the first processor 333 may complete the charging of the first battery 311 by controlling the charging circuit (for example, deactivating the charging circuit) to stop outputting the power signal to the first battery 311. In the above description, the target voltage value may be the same as a voltage difference between positive (+) and negative (-) poles of the battery when the battery is in a full charge state. The full charge state may be the SOC when a charging rate of the battery reaches a configured maximum amount of charging.

The first processor 333 may control discharging of the first battery 311, based on the SOC. The discharging may be the supplying from the first battery 311 to an external electronic device through a system (in other words, load) (for example, the first processor 333, the display 318, or the first connector 312) of the power supply device 301. The SOC indicates a charging rate of the battery and may be digitized into a percentage (%).

According to an embodiment, when the charging rate of the first battery 311 is lowered to a predetermined threshold charging value (for example, 30%) or lower while the power supply device 301 supplies first power having a first current value (for example, 1.67 A) to the power reception device 302 through the first power conversion circuit 313, the first processor 333 may transmit a first request message making a request for receiving low power from the power supply device 301 to the power reception device 302 through the first communication circuit 316. In response to reception of the first request message, the power reception device 302 may receive second power lower than the first power from the power supply device 301. Accordingly, the current of the power signal output from the first power conversion circuit 313 to the power reception device 302 through the first power terminal 312a may be lowered to a value equal to or smaller than a first threshold current value smaller than the first current value. For example, the output power may be lowered from about 15 W (=9 V*1.67 V) (first power) to about 5 W (=9 V*0.55 A) (second power). The presented value is only to obtain more intuitive understanding but does not limit the technical idea of the disclosure. A value to be presented below should be understood in the same way.

According to an embodiment, the first processor 333 may insert information indicating the first threshold current value (for example, 0.55 A) according to a protocol (for example, power data objects (PDO) or programmable power supply (PPS)) predetermined for PD communication into the first request message and transmit the first request message to the power reception device 302. The power reception device 302 may identify the first threshold current value in the first request message. The power reception device 302 may limit the current received from the power supply device 30 to not exceed the first threshold current value (<first current value). As a result, the power reception device 302 may receive the second power lower than the first power from the power supply device 301.

The power supply device 301 may include a power management circuit configured to perform substantially the same as the power management module 188 of FIG. 1. The first communication circuit 316 may be a circuit included in the power management circuit. Alternatively, the first communication circuit may be configured as a separate circuit. For example, the first communication circuit 316 may be located adjacent to the first connector 312 or may be integrated with the first connector 312.

The first communication circuit (For example, USB controller) 316 may identify the type of an external device connected to the first connector 312, based on data received from the external device through the first data terminal 312b. The communication circuit 316 may transmit identification information indicating the type of the external device to the first processor 333. The first processor 333 may perform communication with the external device through the first communication circuit 316 according to a power delivery (PD) communication protocol, based on the identification information, so as to perform an operation of negotiating a source for supplying power and a sink for receiving power between the two devices 301 and 302. After the power supply device 301 is determined as the source and the power reception device 302 is determined as the sink, the first processor 333 may perform communication with the power reception device 302 through the first communication circuit 316 according to a PD communication protocol (for example, power data objects (PDO) or programmable power supply (PPS)), so as to perform an operation of negotiating a current value and/or a voltage value of the power signal to be transmitted by the power supply device 301. The first processor 333 may control one of the power conversion circuits 314 and 315 to output a power signal having the voltage value and the current value determined by the negotiation result. When the determined voltage value and current value are values (for example, 9 V and 1.66 A) corresponding to fast charging, the first processor 333 may deactivate the second power conversion circuit 314, activate the first power conversion circuit 313, and supply power to the power reception device 302 through the first power terminal 312a by using the activated first power conversion circuit 313.

The sensing circuit 317 may be disposed inside the power supply device 301 (for example, near the first battery 311, the first power conversion circuit 313, or the second power conversion circuit 314) to generate data used for identifying internal temperature of the power supply device 301 and provide the generated data to the first processor 333. For example, the sensing circuit 317 may include a temperature sensor (for example, the power gauge 230 of FIG. 2) configured to detect internal temperature, generate data corresponding to the detected temperature, and provide the data to the first processor 333. As another example, the first processor 333 may acquire temperature data by transmitting a request to the sensing circuit 317 periodically (polling method) or an interrupt method. According to the increase in the internal temperature, internal resistance of an electric circuit included in the power supply device 301 may linearly increase. For example, according to the increase in the internal temperature, internal resistance of a lumped element (for example, an inductor) in the second power conversion circuit 314 may increase, and the increase in the internal resistance may cause an increase in potential difference between both ends of the lumped element. The sensing circuit 317 may be configured to measure a voltage between both ends of the electric circuit, generate data corresponding to the voltage, and provide the data to the first processor 333. The first processor 333 may determine internal temperature of the power supply device 301, based on data indicating the voltage received from the sensing circuit 317.

According to an embodiment, when the internal temperature increases to a first threshold temperature value (for example, about 50 degrees) or higher while the power supply device 301 supplies first power having a first current value to the power reception device 302 through the first power conversion circuit 313, the first processor 333 may transmit a first request message making a request for receiving low power from the power supply device 301 through the first communication circuit 316. In response to reception of the first request message, the power reception device 302 may receive third power (which may be the same as or different from the second power) lower than the first power from the power supply device 301. As a result, the current value of the power signal output from the first power conversion circuit 313 to the power reception device 302 through the first power terminal 312a may be controlled downwards from the first current value to a second threshold current value (which may be the same as or different from the first threshold current value). For example, the output power may be lowered from about 15 W (=9 V*1.67 A) (first power) to about 5 W or 3 W (=9 V*0.33 A) (third power).

According to an embodiment, the first processor 333 may insert information indicating the second threshold current value (for example, 0.33 A or 0.55 A) according to a PD communication protocol (for example, power data objects (PDO) or programmable power supply (PPS)) into the first request message and transmit the first request message to the power reception device 302. The power reception device 302 may identify the second threshold current value in the first request message. The power reception device 302 may limit the current received from the power supply device 30 to not exceed the second threshold current value (<second current value). As a result, the power reception device 302 may receive the third power lower than the first power from the power supply device 301.

According to an embodiment, when the internal temperature is lowered to a value equal to or smaller than the second threshold temperature value (for example, a value (for example, 48 degrees) which is the same as or smaller than the first threshold temperature value), the first processor 333 may transmit a second request message making a request for releasing the current limit to the power reception device 302 through the first communication circuit 316. In response to reception of the second request message, the power reception device 302 may release the current limit and receive the first power from the power supply device 201. As a result, the current of the power signal output from the first power conversion circuit 313 to the power reception device 302 through the first power terminal 312a may be controlled upwards from the second threshold current value to the first current value.

According to an embodiment, the first processor 333 may monitor the state of the display 318 while the power supply device 301 supplies the first power having the first current value to the power reception device 302 through the first power conversion circuit 313, and identify that the display 318 is in the active state (for example, the state in which power of the first battery 311 is supplied to pixels of the display 318 and the screen is turned on) according to the monitoring result. Based on the active state of the display 318, the first processor 333 may transmit a first request message making a request for receiving less power from the power supply device 301 to the power reception device 302 through the first communication circuit 316. In response to reception of the first request message, the power reception device 302 may receive fourth power (which may be the same as or different from the second power or the third power) lower than the first power from the power supply device 301. As a result, the current value of the power signal output from the first power conversion circuit 313 to the power reception device 302 through the first power terminal 312a may be controlled downwards from the first current value to a third threshold current value (which may be the same as or different from the first threshold current value or the second threshold current value). For example, the output power may be lowered from about 15 W (=9 V*1.67 A) (first power) to about 3 W, 5 W, or 8 W (=9 V*0.88 A) (fourth power).

According to an embodiment, the first processor 333 may insert information indicating the third threshold current value (for example, 0.33 A, 0.55 A, or 0.88 A) into the first request message and transmit the first request message to the power reception device 302. The power reception device 302 may identify the third threshold current value in the first request message. The power reception device 302 may limit the current received from the power supply device 30 to not exceed the third threshold current value (<first current value). As a result, the power reception device 302 may receive the fourth power lower than the first power from the power supply device 301.

According to an embodiment, based on that the display 318 switched from the active state to the inactive state, based on the monitoring result, the first processor 333 may transmit the second request message making a request for releasing the current limit to the power reception device 302 through the first communication circuit 316. In response to reception of the second request message, the power reception device 302 may release the current limit and receive the first power from the power supply device 201. As a result, the current of the power signal output from the first power conversion circuit 313 to the power reception device 302 through the first power terminal 312a may be controlled upwards from the third threshold current value to the first current value.

The power reception device 302 may include a second battery 341, a second connector 342, a charging circuit 343, a second communication circuit 344, a second memory 355, and a second processor 366. The charging circuit 343, the second memory 355, and the second processor 366 may be implemented to be substantially the same as the charging circuit 210, the memory 130, and the processor 120, and thus perform the same function. The second memory 355 may store instructions for supporting power supply from the power supply device 301 to the power reception device 302 and may be executed by the second processor 366.

The second connector 342 may include a second power terminal 342a for transmitting or receiving a power signal to an external electronic device and a second data terminal 342b for data communication with the external electronic device. For example, the second connector 342 may be configured as a socket according to universal serial bus (USB) Type-C and coupled to a plug of the cable 303. Among pins of the USB Type-C socket, a VBUS pin may be used as the second power terminal 342a and a CC pin and/or a differential signal pin (DP (D+) or DN (D-)) may be used as the second data terminal 342b.

Both ends 343a and 343b of the charging circuit 343 may be connected to the second power terminal 342a and the second battery 341, respectively. The charging circuit 343 may include a buck boost converter configured to convert a current value and/or voltage value of a power signal received from the first end 343a and output the current value and/or voltage value to the second battery 341 through the second end 343b. For example, the charging circuit 343 may support constant current (CC) and constant voltage (CV) charging, based on the control of the second processor 366. The charging circuit 343 may constantly maintain the current of the power signal output from the charging circuit 343 to the second battery 341 as a charging current value configured by the second processor 366 to increase the voltage of the second battery 341 up to a predetermined target voltage value while the charging mode is configured as the CC mode. When the voltage of the second battery 341 reaches the target voltage value and thus the charging mode switches from the CC mode to the CV mode during charging of the second battery 341, the charging circuit 343 may gradually reduce the current of the power signal output from the charting circuit 343 to the second battery 341 according to the control of the second processor 366, so the voltage of the second battery 341 may be maintained as the target voltage value. When the current of the power signal input into the second battery 341 is lowered up to a current value (for example, topoff current value) predetermined for completing charging during charging of the second battery 341 in the CV mode, the charging circuit 343 may complete charging of the second battery 341 by stopping outputting the power signal to the second battery 341, based on the control of the second processor 366.

The power reception device 302 may include a power management circuit configured to perform substantially the same function as that of the power management module 188 of FIG. 1. The second communication circuit 344 may be a circuit included in the power management circuit. Alternatively, the second communication circuit may be configured as a separate circuit. For example, the second communication circuit 344 may be located adjacent to the second connector 342 or may be integrated with the second connector 342.

The second communication circuit 344 (for example, USB controller) may identify the type of an external device connected to the second connector 342, based on data received from the external device through the second data terminal 342b. The communication circuit 344 may transmit identification information indicating the type of the external device to the second processor 366. The second processor 366 may perform communication with the external device through the second communication circuit 344 according to a power delivery (PD) communication protocol, based on the identification information, so as to perform a negotiation operation of determining a source and a sink between the two devices 301 and 302. After the power supply device 301 is determined as the source and the power reception device 302 is determined as the sink, the second processor 366 may perform communication with the power supply device 301 through the second communication circuit 344 according to a PD communication protocol (for example, power data objects (PDO) or programmable power supply (PPS)), so as to perform an operation of negotiating a current value and/or a voltage value of the power signal to be received by the power reception device 302. The second processor 366 may control the charging circuit 343 to receive a power signal having the voltage value and/or the current value determined by the negotiation result.

According to an embodiment, the second processor 366 may receive a first request message from the power supply device 301 through the second data terminal 342b while the charging circuit 343 receives first power (for example, 15 W) having a first current value (for example, 1.67 A) from the power supply device 301 through the second power terminal 342a. Based on reception of the first request message, the second processor 366 may control the charging circuit 343 to receive power lower than the first power from the power supply device 301, so as to reduce power output from the power supply device 301 to be smaller than the first current value.

According to an embodiment, the second processor 366 may identify a power value (for example, 3 W, 5 W, or 8 W) or a current value (for example, 0.33 A, 0.55 A, or 0.88 A) in the first request message. The second processor 366 may determine a value of power to be received from the power supply device 301, based on the identified value, and control the charging circuit 343, based on the determined value.

According to an embodiment, the second processor 366 may receive a second request message from the power supply device 301 through the second data terminal 342b while the charging circuit 343 receives power lower than the first power, based on reception of the first request message. Based on reception of the second request message, it is possible to control the charging circuit 343 to receive the first power from the power supply device 301, so as to increase the current output from the power supply device 301 to a first current value.

According to the above-described embodiment, the power supplied from the power supply device 301 to the power reception device 302 may be controlled according to a state of the power supply device 301. [Table 1] below shows an example of the power control.

**[Table 1]**

| State of power supply device 301 | Supplied power |
|---|---|
| Display activation ↔ deactivation | 15W ↔ 8W |
| Charging rate equal to or lower than 30% | 15W → 5W |
| Internal temperature higher than 48°C ↔ 50°C | 15W ↔ 3W |

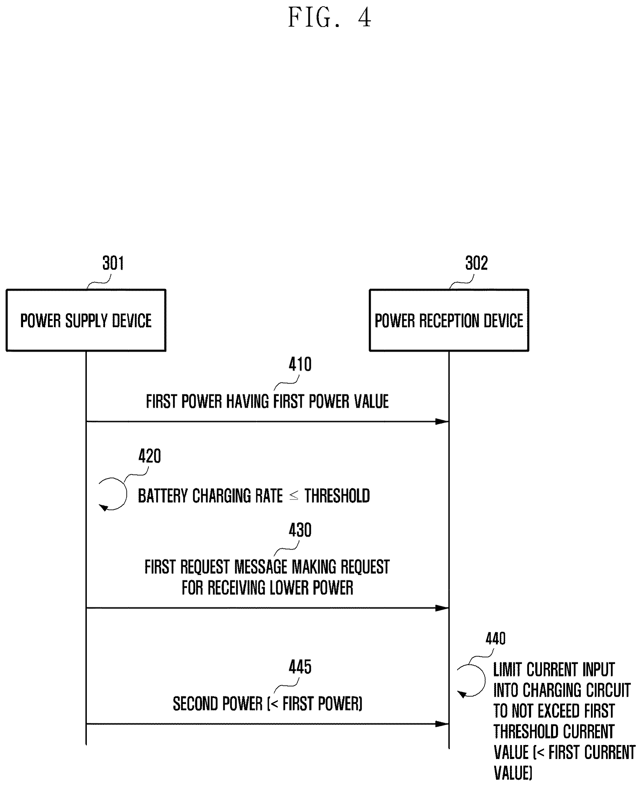

FIG. 4 is a flowchart illustrating operations between the first processor 333 of the power supply device 301 and the second processor 366 of the power reception device 302, based on a decrease in a charging rate of the first battery 311 according to an embodiment. The power supply device 301 and the power reception device 302 may be connected through the cable 303 and determine, as a first power value, a value of power to be supplied from the power supply device 301 to the power reception device 302 through data communication based on a PD communication protocol.

In operation 410, the first processor 333 in the power supply device 301 may control the first power conversion circuit 313 to supply the first power. The first power conversion circuit 313 may receive the first power from the first battery 311, based on the control of the first processor 333, increase the voltage of the received first power by about N times (for example, two times), reduce the current by about 1/N times, and output the first power to the power reception device 302 through the first power terminal 312a. The charging circuit 343 in the power reception device 302 may receive the first power having the first current value from the power supply device 301 through the second power terminal 342a, convert the voltage and/or the current of the first power, and output the first power to the second battery 341, thereby charging the second battery 341.

In operation 420, the first processor 333 in the power supply device 301 may identify that a charging rate of the first battery 311 is equal to or lower than a predetermined threshold charging rate (for example, 30%) through the mentoring circuit 315 while the first power is supplied from the power supply device 301 to the power reception device 302.

In operation 430, based on that it is identified that the charging rate is equal to or lower than the threshold charging value, the first processor 333 in the power supply device 301 may transmit a first request message making a request for receiving less power from the power supply device 301 to the power reception device 302 through the first communication circuit 316. The second processor 366 in the power reception device 302 may receive the first request message through the second communication circuit 344.

In operation 440, based on reception of the first request message, the second processor 366 in the power reception device 302 may control the charging circuit 343 to limit the current input into the charging circuit 343 to not exceed the first threshold current value (<first current value). As the input current is limited to be lower than the first threshold current value according to the result of performance of operation 440, the charging circuit 343 in the power reception device 320 may receive second power lower than the first power from the power supply device 301 through the second power terminal 342a, convert the voltage and/or the current of the received second power, and output the second power to the second battery 341, thereby charging the second battery 341 in operation 445. Information indicating the first threshold current value may be included in the first request message. The second processor 366 may identify the first threshold current value in the first request message to limit the input current.

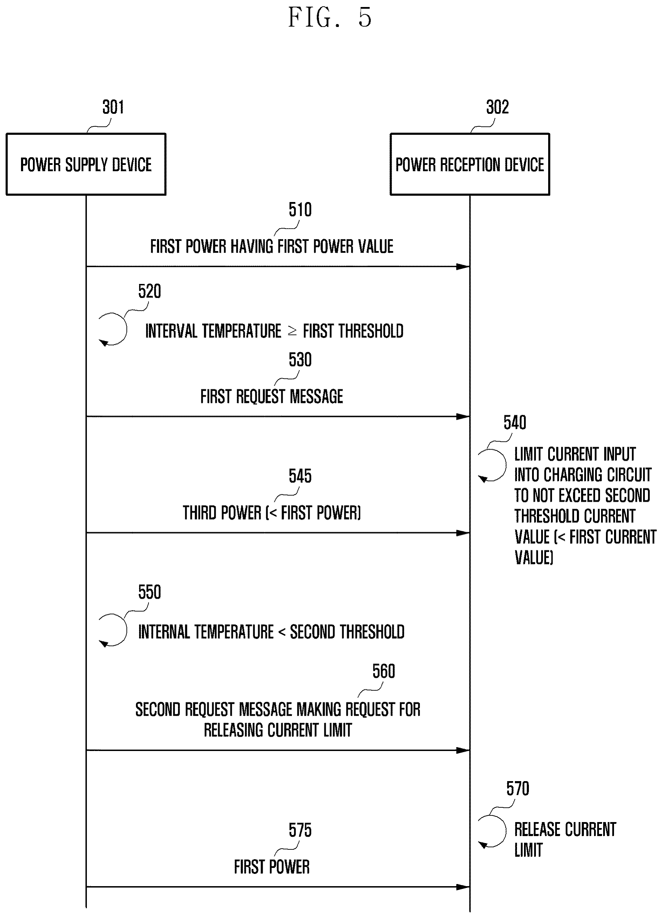

FIG. 5 is a flowchart illustrating operations between the first processor 333 in the power supply device 301 and the second processor 366 in the power reception device 302, based on a change in internal temperature of the power supply device 301 according to an embodiment. The power supply device 301 and the power reception device 302 may be connected through the cable 303 and determine supplied power as a first power value through data communication based on a PD communication protocol. In description of the operations in FIG. 5, the operation which is the same as that of FIG. 4 may be briefly described.

In operation 510, the first processor 333 in the power supply device 301 may control the first power conversion circuit 313 to supply first power having a first current value. The charging circuit 343 in the power reception device 302 may receive the first power having the first current value from the power supply device 301 through the second power terminal 342a, convert the voltage and/or the current of the received first power, and output the first power to the second battery 341.

In operation 520, the first processor 333 in the power supply device 301 may identify that internal temperature increases to a first threshold temperature value (for example, about 50 degrees) or higher through the sensing circuit 317 while the first power is supplied from the power supply device 301 to the power reception device 302.

In operation 530, the first processor 333 in the power supply device 301 may transmit a first request message to the power reception device 302 through the first communication circuit 316, based on that it is identified that the internal temperature is higher than or equal to the first threshold temperature value. The second processor 366 in the power reception device 302 may receive the first request message through the second communication circuit 344.

In operation 540, based on reception of the first request message, the second processor 366 in the power reception device 302 may control the charging circuit 343 to limit the current input into the charging circuit 343 to not exceed a second threshold current value (<first current value). As the input current is limited to be lower than the second threshold current value according to the result of performance of operation 540, the charging circuit 343 in the power reception device 320 may receive third power lower than the first power from the power supply device 301 through the second power terminal 342a in operation 545. Information indicating the second threshold current value may be included in the first request message. The second processor 366 may identify the second threshold current value in the first request message to limit the input current.

In operation 550, the first processor 333 in the power supply device 301 may identify that the internal temperature is lower than a predetermined second threshold temperature value (for example, configured as a value equal to or smaller than the first threshold temperature value) through the sensing circuit 317 while the third power is supplied from the power supply device 301 to the power reception device 302.

In operation 560, based on that the internal temperature is lower than the second threshold temperature value, the first processor 333 in the power supply device 301 may transmit a second request message making a request for releasing the current limit to the power reception device 302 through the first communication circuit 316. The second processor 366 in the power reception device 302 may receive a second request message through the second communication circuit 344.

In operation 570, the second processor 366 in the power reception device 302 may control the charging circuit 343 to release the current limit, based on reception of the second request message. As the current limit is released, the charging circuit 343 in the power reception device 320 may receive first power from the power supply device 301 through the second power terminal 342a in operation 575.

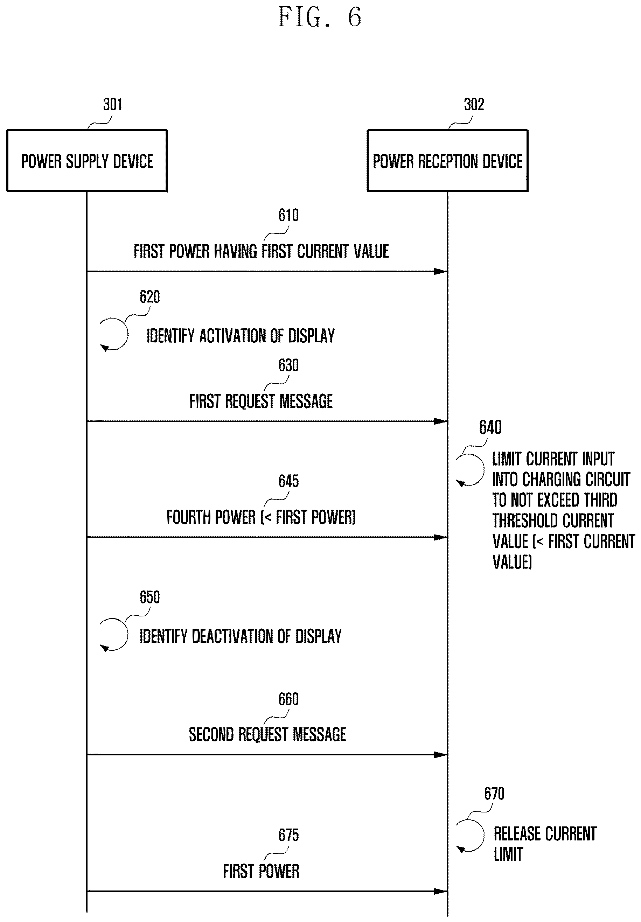

FIG. 6 is a flowchart illustrating operations between the first process 333 in the power supply device 301 and the second processor 366 in the power reception device 302, based on whether the display 318 is activated in the power supply device 301 according to an embodiment. The power supply device 301 and the power reception device 302 may be connected through the cable 303 and determine supplied power as a first power value through data communication based on a PD communication protocol. In description of the operations in FIG. 6, the operation which is the same as that of FIGs. 4 and 5 may be briefly described.

In operation 610, the first processor 333 in the power supply device 301 may control the first power conversion circuit 313 to supply first power having a first current value. The charging circuit 343 in the power reception device 302 may receive the first power having the first current value from the power supply device 301 through the second power terminal 342a, convert the voltage and/or the current of the received first power, and output the first power to the second battery 341.

In operation 620, the first processor 333 in the power supply device 301 may identify that the display 318 is in the active state while first power is supplied from the power supply device 301 to the power reception device 302.

In operation 630, based on that the display 318 is activated, the first processor 333 in the power supply device 301 may transmit a first request message to the power reception device 302 through the first communication circuit 316. The second processor 366 in the power reception device 302 may receive the first request message through the second communication circuit 344.

In operation 640, based on reception of the first request message, the second processor 366 in the power reception device 302 may control the charging circuit 343 to limit the current input into the charging circuit 343 to not exceed a third threshold current value (<first current value). As the input current is limited to be lower than the third threshold current value according to the result of performance of operation 640, the charging circuit 343 in the power reception device 320 may receive fourth power lower than the first power from the power supply device 301 through the second power terminal 342a in operation 645. Information indicating the third threshold current value may be included in the first request message. The second processor 366 may identify the third threshold current value in the first request message to limit the input current.

In operation 650, the first processor 333 in the power supply device 301 may identify that the display 318 is deactivated while the fourth power is supplied from the power supply device 301 to the power reception device 302.

In operation 660, based on that the display 318 is deactivated, the first processor 333 in the power supply device 301 may transmit a second request message to the power reception device 302 through the first communication circuit 316. The second processor 366 in the power reception device 302 may receive a second request message through the second communication circuit 344.

In operation 670, the second processor 366 in the power reception device 302 may control the charging circuit 343 to release the current limit, based on reception of the second request message. As the current limit is released, the charging circuit 343 in the power reception device 320 may receive first power from the power supply device 301 through the second power terminal 342a in operation 675.

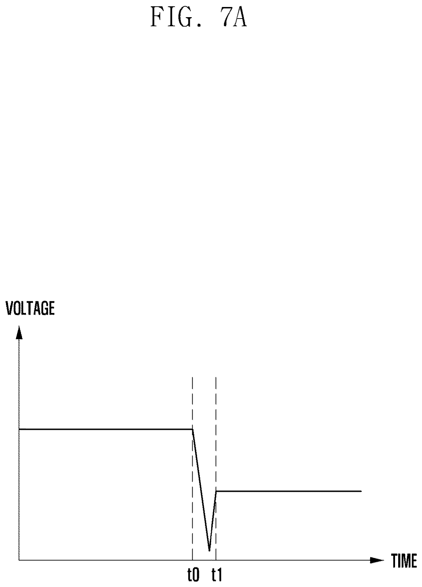

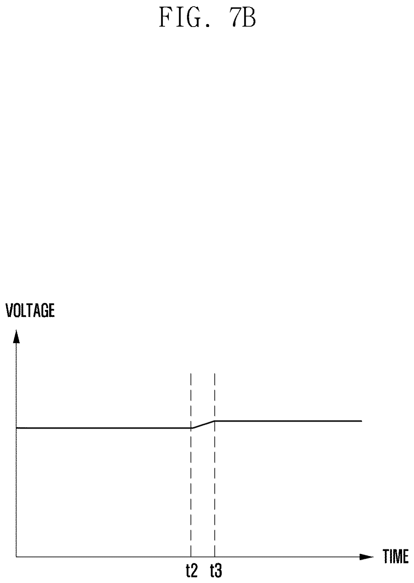

FIG. 7A is a diagram illustrating a change in an output voltage of the power supply device 301 when supplied power is reduced through switching from the first power conversion circuit 313 to the second power conversion circuit, and FIG. 7B is a diagram illustrating a change in an output voltage of the power supply device 301 when supplied power is reduced using the first power conversion circuit 313.

An event (see [Table 1]) for reducing supplied power may be generated in the power supply device 301 while power is supplied from the power supply device 311 to the power reception device 302 through the cable 303. According to the generation of the event, the power supply device 301 may reduce power supplied to the power reception device 302. A method of reducing power may be switching a power conversion circuit from the first power conversion circuit 313 to the second power conversion circuit 314 and supplying power by using the second power conversion circuit 314. Another method follows the above-described embodiment and may limiting the input current in the power reception device 302, based on PD communication between two devices 301 and 302 without switching between switching circuits.

Referring to FIG. 7A, when the event is generated, the first processor 333 may deactivate the first power conversion circuit 313, activate the second power conversion circuit 314, and control the second power conversion circuit 314 to reduce supplied power. The voltage drop (in other words, dip phenomenon that the voltage rapidly drops and rises) may occur during a time interval (t1-t2) in which the first power conversion circuit 313 is deactivated and the second power conversion circuit 314 is activated. The power reception device 302 may end charging of the second battery 341 by mistaking the drop of the input voltage as release of the connection with the power supply device 301 and deactivating the charging circuit 343. After the time point t1, the power reception device 302 may recognize again the connection with the power supply device 301 and perform again the process of negotiating power.

Referring to FIG. 7B, when the event is generated, the first processor 366 may make a request for limiting the input current to the power reception device 302 through PD communication. Accordingly, the power received by the power reception device 302 from the power supply device 301 can be controlled to be low without switching between switching circuits. During a time interval (t3-t2) in which power is controlled, the voltage drop may not occur and accordingly the power supply may be stably maintained.

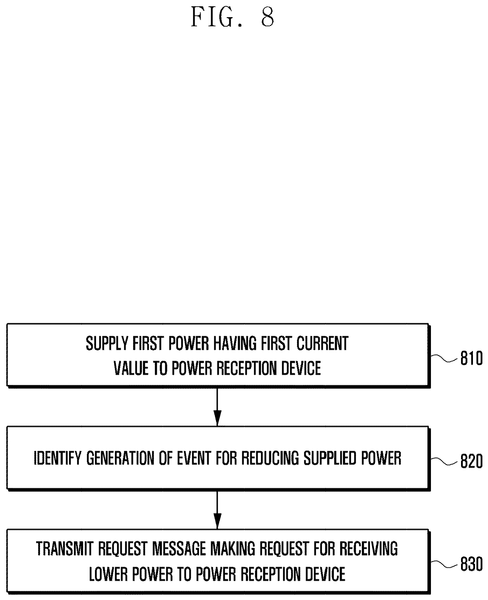

FIG. 8 is a flowchart illustrating operations of the first processor 333 in the power supply device 301 according to an embodiment. The power supply device 301 and the power reception device 302 may be connected through the cable 303 and determine, as a first power value, a value of power to be supplied from the power supply device 301 to the power reception device 302 through data communication based on a PD communication protocol.

In operation 810, the first processor 333 may control the first power conversion circuit 313 to supply first power having a first current value to the power reception device 302 through the power terminal.

In operation 820, the first processor 333 may identify that the event (for example, [Table 1]) of reducing power supplied to the power reception device 302 is generated in the power supply device 301 while the first power is supplied to the power reception device 302.

In operation 830, the first processor 333 may transmit a request message (for example, the first request message of FIG. 4, 5, or 6) making a request for receiving less power to the power reception device 302 through the first data terminal 312b, based on that the generation of the predetermined event is identified.

According to an embodiment, an electronic device (for example, the power supply device 301) may include a battery, a connector including a power terminal and a data terminal, a communication circuit connected to the data terminal, a power conversion circuit connected to the battery and the power terminal and configured to step up a voltage of the battery at a predetermined ratio and output power of the battery to the power terminal, and a memory. The memory may store instructions that, when executed by the processor, cause the electronic device to control the power conversion circuit to supply first power having a first current value to an external power reception device through the power terminal. The instructions may cause, when executed by the processor, the electronic device to identify that an event indicating that the power supplied to the power reception device must be lowered is generated in the electronic device while the first power is supplied to the power reception device. The instructions may cause, when executed by the processor, the electronic device to transmit a first request message making a request for receiving less power to the power reception device through the data terminal, based on that the generation of the event is identified.

The instructions may cause, when executed by the processor, the electronic device to identify that, as the event, a charging rate of the battery is equal to or lower than a predetermined threshold charging value.

The instructions may cause, when executed by the processor, the electronic device to identify that, as the event, internal temperature of the electronic device is higher than or equal to a predetermined first threshold temperature value.

The instructions may cause, when executed by the processor, the electronic device to identify that the internal temperature is lower than a second threshold temperature value which is equal to or smaller than the first threshold temperature value. The instructions may cause, when executed by the processor, the electronic device to transmit a second request message making a request for releasing a current limit to the power reception device through the data terminal, based on that the internal temperature is lower than the second threshold temperature value.

The instructions may cause, when executed by the processor, the electronic device to identify that, as the event, a display of the electronic device is activated.

The instructions may cause, when executed by the processor, the electronic device to identify that the display is deactivated and transmit a second request message making a request for releasing a current limit to the power reception device through the data terminal, based on that the display is deactivated.

The instructions may cause, when executed by the processor, the electronic device to insert information indicating a current value by which the power reception device should reduce into the first request message and transmit the first request message to the power reception device.

The event may include a first event indicating that a charging rate of the battery is equal to or lower than a predetermined threshold charging value, a second event indicating that internal temperature of the electronic device is higher than or equal to a predetermined threshold temperature value, or a third event indicating that a display of the electronic device is activated. The instructions may cause, when executed by the processor, the electronic device to insert information indicating a first threshold current value into the first request message when the first event is generated. The instructions may cause, when executed by the processor, the electronic device to insert information indicating a second threshold current value different from the first threshold current value into the first request message when the second event is generated. The instructions may cause, when executed by the processor, the electronic device to insert information indicating a third threshold current value different from the first threshold current value and the second threshold current value into the first request message when the third event is generated.

According to an embodiment, an electronic device (for example, the power reception device 302) includes a battery, a connector including a power terminal and a data terminal, a communication circuit connected to the data terminal a charging circuit connected to the battery and the power terminal and configured to charge the battery by using power received from an external power supply device through the power terminal, a processor, and a memory. The memory may store instructions that, when executed by the processor, cause the electronic device to receive a first request message making a request for receiving less power from the power supply device through the communication circuit while the charging circuit receives first power having a first current value from the external power supply device through the power terminal and charges the battery. The instructions may cause, when executed by the processor, the electronic device to, based on reception of the first request message, limit a current input into the charging circuit from the power supply device through the power terminal to not exceed a threshold current value configured to be smaller than the first current value, so as to receive power lower than the first power from the power supply device through the power terminal.

The instructions may cause, when executed by the processor, the electronic device to receive a second request message from the power supply device through the communication circuit while the input current is limited, based on reception of the first request message. The instructions may cause, when executed by the processor, the electronic device to receive the first power from the external power reception device through the power terminal by releasing the limit of the input current, based on reception of the second request message.

The instructions may cause the processor to identify the threshold current value in the first request message.

According to an embodiment, an electronic device (for example, the power supply device 301) may include an operation of supplying first power having a first current value to an external power reception device through a power terminal included in the electronic device by using a power conversion circuit configured to boost a voltage of a battery at a predetermined ratio. The method may include an operation of identifying that an event indicating that power supplied to the power reception device must be lowered is generated in the electronic device while the first power is supplied to the power reception device. The method may include an operation of, based on that the generation of the event is identified, transmitting a first request message making a request for receiving less power to the power reception device through a data terminal included in the electronic device.

The operation of identifying may include an operation of identifying that, as the event, a charging rate of the battery is equal to or lower than a predetermined threshold charging value.

The operation of identifying may include an operation of identifying that, as the event, internal temperature of the electronic device is higher than or equal to a predetermined first threshold temperature value.

The operation of identifying may include an operation of identifying that, as the event, a display of the electronic device is activated.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a battery;
a connector comprising a power terminal and a data terminal;
a communication circuit connected to the data terminal;
a power conversion circuit connected to the battery and the power terminal, and configured to boost a voltage of the battery at a predetermined ratio and output power of the battery to the power terminal;
a processor; and
a memory configured to store instructions,
wherein the instructions, when executed by the processor, cause the electronic device to:
control the power conversion circuit to supply first power having a first current value to an external power reception device through the power terminal;
identify that an event in which the power supplied to the power reception device needs to be lowered occurs in the electronic device while the first power is supplied to the power reception device; and
based on identifying the ocurrence of the event, transmit a first request message requesting to receive less power to the power reception device through the data terminal.

2. The electronic device of claim 1, wherein the instructions, when executed by the processor, cause the electronic device to identify, as the event, that a charging rate of the battery is equal to or less than a predetermined threshold charging value.

3. The electronic device of claim 1, wherein the instructions, when executed by the processor, cause the electronic device to identify, as the event, that internal temperature of the electronic device is equal to or higher than a predetermined first threshold temperature value.

4. The electronic device of claim 3, wherein the instructions, when executed by the processor, cause the electronic device to:
identify that the internal temperature is lower than a second threshold temperature value equal to or smaller than the first threshold temperature value; and
based on the internal temperature lower than the second threshold temperature value, transmit a second request message requesting to release the current limit to the power reception device through the data terminal,.

5. The electronic device of claim 1, wherein the instructions, when executed by the processor, cause the electronic device to identify, as the event, that a display of the electronic device is activated.

6. The electronic device of claim 5, wherein the instructions, when executed by the processor, cause the electronic device to:
identify that the display is deactivated; and
based on the deactivated display, transmit a second request message requesting to release the current limit to the power reception device through the data terminal.

7. The electronic device of claim 1, wherein the instructions, when executed by the processor, cause the electronic device to containing information indicating a current value, by which the power reception device needs to reduce, in the first request message and transmit the first request message to the power reception device.

8. The electronic device of claim 7, wherein the event comprises:
a first event in which a charging rate of the battery is equal to or less than a predetermined threshold charging value;
a second event in which internal temperature of the electronic device is equal to or higher than a predetermined threshold temperature value; or
a third event in which a display of the electronic device is activated, and
wherein the instructions, when executed by the processor, cause the electronic device to:
in case that the first event ocurs, contain information indicating a first threshold current value in the first request message;
in case that the second event occurs, contain information indicating a second threshold current value different from the first threshold current value in the first request message; and
in case that the third event occurs, contain information indicating a third threshold current value different from the first threshold current value and the second threshold current value in the first request message.

9. An electronic device comprising:
a battery;
a connector comprising a power terminal and a data terminal;
a communication circuit connected to the data terminal;
a charging circuit connected to the battery and the power terminal, and configured to charge the battery by using power received from an external power supply device through the power terminal;
a processor; and
a memory configured to store instructions,
wherein the instructions, when executed by the processor, cause the electronic device to:
receive, through the communication circuit, a first request message requesting to receive less power from the power supply device while the charging circuit receives first power having a first current value from the external power supply device through the power terminal and charges the battery; and
based on receiving the first request message, limit a current input into the charging circuit from the power supply device through the power terminal to a value not exceeding a threshold current value configured to be smaller than the first current value, so as to receive less power than the first power from the power supply device through the power terminal.

10. The electronic device of claim 9, wherein the instructions, when executed by the processor, cause the electronic device to:
receive a second request message from the power supply device through the communication circuit while the input current is limited based on reception of the first request message; and
based on receiving the second request message, release the input current limit to receive the first power from the external power reception device through the power terminal.

11. The electronic device of claim 9, wherein the instructions, when executed by the processor, cause the electronic device to identify the threshold current value from the first request message.

12. A method of operating an electronic device, the method comprising:
supplying first power having a first current value to an external power reception device through a power terminal included in the electronic device by using a power conversion circuit configured to boost a voltage of a battery at a predetermined ratio;
identifying that an event in which that power supplied to the power reception device needs to be lowered occurs in the electronic device while the first power is supplied to the power reception device; and
based on identifying the occurrence of the event, transmitting a first request message requesting to receive less power to the power reception device through a data terminal included in the electronic device.

13. The method of claim 12, wherein the identifying comprises identifying, as the event, that a charging rate of the battery is equal to or less than a predetermined threshold charging value.

14. The method of claim 12, wherein the identifying comprises identifying, as the event, that internal temperature of the electronic device is equal to or higher than a predetermined first threshold temperature value.

15. **16.** The method of claim 12, wherein the identifying comprises identifying, as the event, that a display of the electronic device is activated.
